# EUROPEAN PATENT APPLICATION

(11) **EP 1 582 506 A1**
(43) Date of publication of application: **05.10.2005**
(21) Application number: 04020520.5
(22) Date of filing: 30.08.2004
(51) Int. Cl.: C02F 1/465

(54) **Electroflotation method for purifying wastewater from vibratory finishing and wastewater in general**

(30) Priority: 30.03.2004 IT MI20040638
(71) Applicant: ROLLWASCH ITALIANA S.p.A., 20124 Milano (IT)
(72) Inventor: Mamone, Giancarlo, 20129 Milano (IT)
(74) Representative: Modiano, Guido

(57) **Abstract**

An electroflotation method for purifying vibratory finishing wastewater and wastewater in general, which consists in introducing a liquid to be purified into a containment tank (1) provided with at least one pair of electrodes (2,3) with an aluminum or iron anode and with cathodes made of non-oxidizing material, which are connected to an electric power source, and in performing electroflotation to produce aluminum or iron hydrate; corpuscles made of an electrically non-conducting material are introduced into the liquid to be purified and the containment tank (1) is subjected to a vibration, with continuous separation of the deposits from the electrodes (2,3).

## Description

The present invention relates to an electroflotation method for purifying wastewater from vibratory finishing and wastewater in general.

As is known, purification of wastewater in general and particularly of vibratory finishing wastewater currently uses an electroflotation process, which is substantially based on the concept of producing aluminum or iron hydrate not by adding salts of these metals, which become hydrates by adding alkali, but directly from the metal, which is in the shape of plates of aluminum or iron, as an effect of electric current.

This type of purification process has the advantage of not requiring chemical products for coagulation-flocculation, since the primary flocculating agent forms due to the electric current, which dissolves aluminum ions starting from the metal.

Since salts such as aluminum or iron chlorides or sulfates are no longer introduced, continuous increase in the salinity of water that is recirculated and purified with the chemical-physical system is avoided, which is always one of the limitations of the conventional processes.

Reaching certain degrees of salinity in fact makes it necessary, at that point, to replace the water to be recirculated and therefore to dispose of it in some way in accordance with statutory provisions.

In this case, it is almost always necessary to resort to specialized and authorized firms, with the associated high costs.

Another advantage that arises from purification by electroflotation consists in that the electrolysis produced by the current also forms atomic gases, such as hydrogen and oxygen, which in turn can help to destroy some organic pollutants, such as for example surfactants.

In contrast with the advantages noted above, the electroflotation method suffers the drawback of requiring continuous maintenance due to the layer of aluminum hydrates and oxides that forms on the surface of the electrodes, without separating from them, so that over time the electric current decreases and therefore so does the formation of hydrates.

Very often it is in fact necessary to stop the system in order to clean the electrodes manually.

Another drawback is also constituted by the fact that the electrodes are subjected to uneven wear, with the need to replace them often before they are completely worn.

The aim of the present invention is to eliminate the drawbacks noted above by providing an electroflotation method for purifying vibratory finishing wastewater and wastewater in general, which allows to eliminate the maintenance step, with the possibility to keep the electrodes constantly clean, with the evident advantage of higher uniformity in the execution of the process.

Within this aim, an object of the invention is to provide a method that allows to reduce maintenance steps significantly, thus contributing to a better overall management of the system.

Another object of the present invention is to provide a method that thanks to its particular characteristics is capable of giving the greatest assurances of reliability and safety in use.

Another object of the present invention is to provide an electroflotation method for purifying vibratory finishing wastewater and wastewater in general that can be obtained easily starting from commonly commercially available elements and materials and is also competitive from a merely economical standpoint.

This aim and these and other objects that will become better apparent hereinafter are achieved by an electroflotation method for purifying vibratory finishing wastewater and wastewater in general, according to the invention, which consists in introducing a liquid to be purified into a containment tank provided with at least one pair of electrodes with an aluminum or iron anode and with a cathode made of non-oxidizing material, which are connected to an electric power source, and in performing electroflotation to produce aluminum or iron hydrate, characterized in that corpuscles made of an electrically non-conducting material are introduced into said liquid to be purified and in that said containment tank is subjected to a vibration, with separation of the deposits from said at least one pair of electrodes.

Further characteristics and advantages of the invention will become better apparent from the description of a preferred but not exclusive embodiment of an electroflotation method for purifying vibratory finishing wastewater and wastewater in general, illustrated by way of nonlimiting example in the accompanying drawings, wherein:

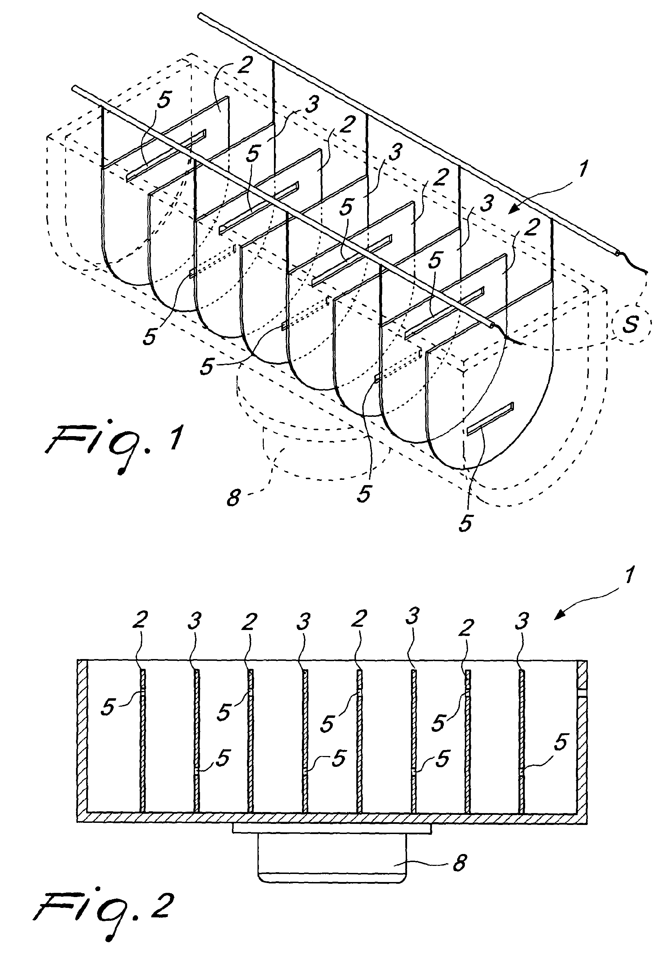

Figure 1 is a schematic perspective view of a tank for containing a liquid to be purified;
Figure 2 is a longitudinal sectional view of the tank;
Figure 3 is a sectional view of the containment tank of the liquid to be purified, which is arranged as a continuation of a rectangular vibratory finishing tank;
Figure 4 is a schematic view of the containment tank, arranged below a circular vibratory finishing apparatus.

With reference to the figures, the electroflotation method for purifying vibratory finishing wastewater and wastewater in general, according to the invention, introduces the liquid to be purified into a containment tank 1, which typically has a cradle-like cross-section and is substantially elongated.

Electrodes are arranged in the containment tank 1 and are advantageously constituted alternately by anodes 2 and cathodes 3, which in practice are provided by partitions and have passage slots 5 arranged alternately at different height to allow uniform flow of the electroflotation liquid through them.

The electrodes 2 and 3 can be connected to a DC-type electric source S, and in this case aluminum and iron anodes and cathodes made of non-oxidizing material, such as for example stainless steel or the like, are provided; optionally, if an AC source is used, all the electrodes are made of aluminum and iron.

A particularity of the invention is constituted by the fact that corpuscles made of plastics or ceramic, and in any case of a material that is not electrically conducting, are introduced into the liquid to be purified.

In order to keep the electrodes always clean, the containment tank 1 is subjected to continuous vibration, for example by means of a vibrating unit, generally designated by the reference numeral 8.

Due to the vibration, the corpuscles start rotating, causing a continuous friction on the electrodes.

The electrolytic process, in view of the presence of the sludge, which in any case has a certain conductivity, occurs like in a normal static treatment tank, but the friction produced by the corpuscles, which can be of the lightly- or medium-abrasive type, keeps the electrodes continuously clean, thus avoiding uneven wear and the need for frequent maintenance.

The current density varies, for an equal distance between the electrodes, as the voltage and electrical conductivity of the sludge to be treated change, said sludge acting in practice as an electrolyte.

Excellent results are obtained with current densities that can vary from 0.2 to 2 amps/dm², because in these conditions the retention time of the sludge in the vibrating treatment tank varies from 5 to 20 minutes for wastewater with conductivities comprised between 0.5 and 1.5 mS (millisiemens).

The voltage applied varies from 24 to 60 volts or more, depending on the conductivity of the electrolyte.

The various electrodes made of aluminum or other materials, as mentioned earlier, have openings alternately in the lower part and in the upper part, so as to allow a more regular flow of sludge and thus a more constant retention time in the treatment tank.

With the described arrangement, it is particularly advantageous to apply AC current, and therefore all the electrodes are made of aluminum or iron, since as is known the polarity changes continuously with AC current.

The wastewater that exits from the treatment tank, which contains the cleared water and the flocculate, must be separated from said flocculate.

Since it has been observed experimentally that sedimentation is not advantageous, since gases form during electrolysis, it has been found that the optimum is to perform simple filtration on filter bags for small flow-rates or by using a filter press for higher flow-rates.

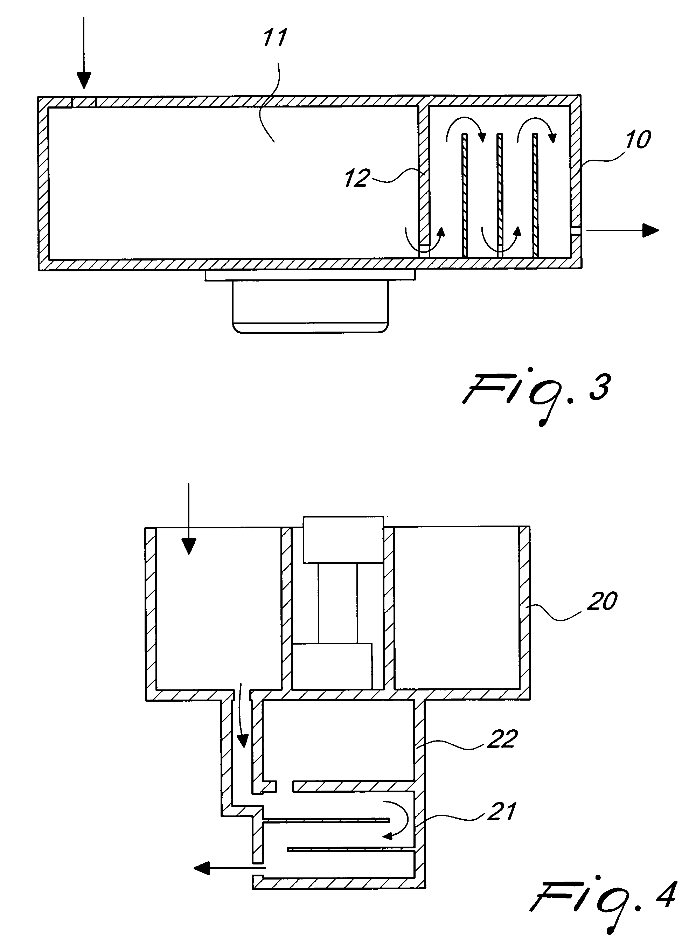

By utilizing the concept mentioned above, as shown in Figure 3, it is possible to provide the tank for containing the liquid to be purified, now designated by the reference numeral 10, directly on the extension or as a continuation of a vibratory finishing tank 11; in this case, one obtains in the tank 11 the traditional vibratory finishing step and, by means of the partition 12, the wastewater, but not the parts to be treated and the corpuscles used, can pass beyond the partition, where the containment tank 10 is provided, said tank having a set of electrodes of the type described above.

The advantage that allows to use the same vibrating tank to achieve vibratory finishing and to purify the wastewater is evident.

At the output of the containment tank, the water can be filtered and recycled in the vibrating unit itself.

In practice, with this solution it is possible to obtain electrocoagulation directly in the process tank, without having to resort to a specifically provided machine, thus saving on costs, space and energy.

A similar solution can be used, as shown in Figure 4, with circular vibratory finishing machines or tanks 20, and in this case it is possible to provide the containment tank, designated by the reference numeral 21, in which purification is to be performed, below the vibrating unit 22 and so that it is connected to the vibratory finishing tank, achieving solutions that are similar to the ones described above.

From what has been described above, it is thus evident that the invention achieves the proposed aim and objects, and in particular the fact is stressed that an electroflotation method for purifying vibratory finishing wastewater and wastewater in general is provided which allows to keep the electrodes always clean, optimizing the purification process, without having to perform, as currently occurs with conventional solutions, continuous maintenance of said electrodes.

Furthermore, the possibility to have electrodes that are always clean makes it particularly advantageous to use AC current to supply the electrodes.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2004A000638 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electroflotation method for purifying vibratory finishing wastewater and wastewater in general, consisting in introducing a liquid to be purified into a containment tank (1) provided with at least one pair of electrodes with an aluminum or iron anode (2) and with a cathode (3) made of non-oxidizing material, which are connected to an electric power source, and in performing electroflotation to produce aluminum or iron hydrate, **characterized in that** corpuscles made of an electrically non-conducting material are introduced into said liquid to be purified and **in that** said containment tank (1) is subjected to a vibration, with separation of the deposits from said at least one pair of electrodes.

2. The method according to claim 1, **characterized in that** all-aluminum and/or all-iron electrodes are used with an AC electric power supply.

3. The method according to the preceding claims, **characterized in that** said corpuscles are of a lightly- or medium- abrasive type.

4. The method according to one or more of the preceding claims, **characterized in that** said current has a density comprised between 0.2 and 2 amp s/dm².

5. The method according to one or more of the preceding claims, **characterized in that** the retention of the liquid to be purified in said vibrating tank (1) is comprised between 5 and 20 minutes.

6. The method according to one or more of the preceding claims, **characterized in that** the applied voltage varies between 24 and 60 volts.

7. The method according to one or more of the preceding claims, **characterized in that** it provides for the step of filtering the wastewater that exits from said containment tank (1).

8. A wastewater purification apparatus, particularly for purifying vibratory finishing wastewater, **characterized in that** it comprises a containment tank (1) with at least one pair of electrodes (2, 3) connected to an electric source, corpuscles made of electrically nonconducting material being provided in said water, a vibration unit (8) being further provided which acts on said containment tank (1).

9. The apparatus according to one or more of the preceding claims, **characterized in that** said containment tank (10) is arranged on the extension or as a continuation of a vibratory finishing tank (11).

10. The apparatus according to one or more of the preceding claims, **characterized in that** said containment tank (21) is arranged below a circular vibratory finishing tank (20).
